# EUROPÄISCHE PATENTSCHRIFT

(11) **EP 2 427 313 B1**
(45) Veröffentlichungstag und Bekanntmachung des Hinweises auf die Patenterteilung: **04.07.2018**
(21) Anmeldenummer: 10721648.3
(22) Anmeldetag: 06.05.2010
(51) Int. Cl.: B29C 33/38, B29C 43/10, B29C 43/36, B29C 70/44, B29C 70/46

(54) **VORRICHTUNG ZUR FORMGEBUNG EINES WERKSTÜCKS**
DEVICE FOR SHAPING A WORKPIECE
DISPOSITIF DE MISE EN FORME D'UNE PIÈCE

(30) Priorität: 07.05.2009 DE 102009020190
(43) Veröffentlichungstag der Anmeldung: 14.03.2012
(73) Patentinhaber: Airbus Defence and Space GmbH, 85521 Ottobrunn (DE)
(72) Erfinder: KUNTZ, Julian, 86179 Augsburg (DE); STADLER, Franz, 85113 Böhmfeld (DE)
(74) Vertreter: LKGLOBAL Lorenz & Kopf PartG mbB Patentanwälte
(86) Internationale Anmeldenummer: PCT/DE2010/000511
(87) Internationale Veröffentlichungsnummer: WO 2010/127667

(56) Entgegenhaltungen:
- EP-A1- 1 000 725
- EP-A2- 0 415 207
- WO-A1-02/02298
- US-A1- 2009 001 630

## Beschreibung

Die Erfindung betrifft eine Vorrichtung zur Formgebung eines Werkstücks mit zumindest einem ersten und einem zweiten Bauteil, zwischen denen das zu formende Werkstück unter Wärmeeinwirkung verpressbar ist.

Eine Vorrichtung zur Formgebung eines Werkstücks dehnt sich bei der Aushärtung des Werkstücks unter Temperatureinwirkung in allen Richtungen gleichmäßig aus. Wird das Werkstück aus einem Verbundwerkstoff, insbesondere einem Faserverbundwerkstoff, hergestellt, so können hierbei Kräfte oder relative Verschiebungen auf das Werkstück einwirken, die eine Beeinträchtigung der Qualität des Werkstücks nach sich ziehen können. Eine solche Beeinträchtigung kann beispielsweise durch einen Faserverzug verursacht sein. Darüber hinaus führt die gleichmäßige thermische Dehnung der Bauteile der Vorrichtung teilweise dazu, dass die Maßhaltigkeit des herzustellenden Werkstücks außerhalb vorgegebener Toleranzen liegt.

In der EP 0 415 207 A2 ist eine Vorrichtung zur Formgebung eines Werkstücks mit zwei konzentrisch angeordneten Bauteilen beschrieben, wobei das zu formende Werkstück unter Wärmeeinwirkung verpressbar ist. Dabei weist eines der beiden Bauteile eine thermische Ausdehnung auf, die in unterschiedlichen Richtungen unterschiedlich groß ist. Diese richtungsabhängige thermische Ausdehnung des Bauteils wird durch die Einbringung von Glasfasern definierter Ausrichtung in das Material des betreffenden Bauteils erzeugt. Die EP 0 415 207 A2 offenbart den Oberbegriff des Anspruchs 1.

Die US2009/0001630 A1 beschreibt ebenfalls eine Vorrichtung zur Formgebung eines Werkstücks mit zwei Bauteilen, zwischen denen das zu formende Werkstück unter Wärmeeinwirkung verpressbar ist. Dabei weist eines der beiden Bauteile, welches mit Karbonfasern verstärkt ist, eine thermische Ausdehnung auf, welche in einer ersten Richtung gleich groß ist wie die thermische Ausdehnung des zu verpressenden Werkstücks und in einer zweiten Richtung größer ist als die thermische Ausdehnung des zu verpressenden Werkstücks. Die richtungsabhängige thermische Ausdehnung des Bauteils wird durch eine gezielte Ausrichtung der Faserlagen innerhalb des Bauteils erzeugt.

Die WO 02/02298 A1 beschreibt eine Vorrichtung zur Formgebung eines Werkstücks mit zwei konzentrisch angeordneten, karbon-faserverstärkten Bauteilen, wobei das zu formende Werkstück unter Wärmeeinwirkung verpressbar ist. Die thermische Ausdehnung der beiden Bauteile wird ausschließlich in radialer Richtung betrachtet, wobei hierbei eine gezielte Einstellung durch definierte Ausrichtung der Verstärkungsfasern erfolgt.

Es ist Aufgabe der vorliegenden Erfindung, eine Vorrichtung zur Formgebung eines Werkstücks anzugeben, mit welcher die Qualität der hergestellten Werkstücke durch gezielte Einstellung der thermischen Ausdehnung der Vorrichtung verbessert werden kann.

Diese Aufgabe wird gelöst durch eine Vorrichtung mit den Merkmalen des Patentanspruches 1. Vorteilhafte Ausgestaltungen ergeben sich aus den abhängigen Patentansprüchen.

Die Erfindung schafft eine Vorrichtung zur Formgebung eines Werkstücks mit zumindest einem ersten und einem zweiten Bauteil, zwischen denen das zu formende Werkstück unter Wärmeeinwirkung verpressbar ist. Die Vorrichtung zeichnet sich dadurch aus, dass das erste und/oder das zweite Bauteil konstruktiv und/oder durch Materialbeschaffenheit derart ausgebildet ist, dass dessen thermische Ausdehnung in unterschiedlichen Richtungen unterschiedlich groß ist.

Durch die Bereitstellung einer Vorrichtung mit gerichteter Wärmedehnung ist es möglich, Werkstücke, welche insbesondere aus Faserverbundwerkstoffen gebildet sind, während der Herstellung gezielt in eine bestimmte Richtung zu verpressen. Hierdurch können Kräfte oder relative Verschiebungen in eine andere, unerwünschte Richtung, welche eine Beeinträchtigung des zu fertigenden Werkstücks verursachen würden, unterbunden werden. Insbesondere ist es hierdurch möglich, einen Faserverbund in dem herzustellenden Werkstück zu vermeiden. Die Folge eines in einer erfindungsgemäßen Vorrichtung hergestellten Werkstücks ist, dass dessen Qualität im Hinblick auf Faserorientierung und Maßhaltigkeit verbessert ist. Ferner ist mit einer erfindungsgemäßen Vorrichtung eine Fertigung bzw. Entformung von Geometrien möglich, welche unter Verwendung einer herkömmlichen Vorrichtung mit nicht-gerichtetem Wärmeausdehnungsverhalten der Bauteile der Vorrichtung nicht herstellbar wären.

Zweckmäßigerweise umfasst das erste und/oder zweite Bauteil, das eine unterschiedliche Ausdehnung in unterschiedlichen Richtungen aufweist, Lagen aus unterschiedlichen Faserverbundwerkstoffen mit unterschiedlichen thermischen Ausdehnungskoeffizienten. Die Lagen sind vorzugsweise derart zueinander angeordnet und/oder miteinander verbunden, dass die thermische Ausdehnung in einer oder mehreren Vorzugsrichtungen erfolgt. Dies bedeutet, die Verbindung der Lagen führt dazu, dass eine thermische Ausdehnung des betreffenden Bauteils in andere Richtungen vermieden oder zumindest minimiert werden kann. Darüber hinaus ist vorgesehen, dass die Lagen derart zueinander angeordnet und/oder miteinander verbunden sind, dass unter Temperatureinwirkung das Maß der thermischen Ausdehnung festgelegt ist. Hierdurch können die während des Verpressens auf das Werkstück auftretenden Kräfte gezielt im Hinblick auf Maßhaltigkeit und Faserorientierung optimiert werden, sofern das Werkstück aus einem Faserverbundwerkstoff hergestellt wird.

Erfindungsgemäß umfasst das erste und/oder das zweite Bauteil, das eine unterschiedliche Ausdehnung in unterschiedlichen Richtungen aufweist, zumindest eine Lage an kohlenstofffaserverstärktem Kunststoff und zumindest eine Lage an glasfaserverstärktem Kunststoff. Erfindungsgemäß sind die Fasern der zumindest einen Lage an kohlenstofffaserverstärktem Kunststoff und die Fasern der zumindest einen Lage an glasfaserverstärktem Kunststoff nicht parallel zueinander orientiert. Durch den Aufbau der Vorrichtung aus unterschiedlichen (Verstärkungsfaser-)Materialien mit unterschiedlichen Wärmeausdehnungskoeffizienten lassen sich die thermische Ausdehnung sowie das Maß der thermischen Ausdehnung in verschiedenen Richtungen gezielt einstellen. Es ist dabei zweckmäßig, wenn die Fasern der zumindest einen Lage an kohlenstofffaserverstärktem Kunststoff und die Fasern der zumindest einen Lage an glasfaserverstärktem Kunststoff in einem Winkel von etwa 90° zueinander orientiert sind. Hierdurch kann die thermische Ausdehnung in einer Richtung begünstigt und in einer dazu senkrechten Richtung minimiert oder unterbunden werden.

In einer konkreten Ausgestaltung ist vorgesehen, dass der Verbundwerkstoff zwei Lagen aus kohlenstofffaserverstärktem Kunststoff umfasst, zwischen denen zwei Lagen aus glasfaserverstärktem Kunststoff angeordnet sind, wobei sämtliche Lagen stoff- und/oder formschlüssig miteinander verbunden sind. Die relative Faserorientierung in den Lagen aus kohlenstofffaserverstärktem Kunststoff und glasfaserverstärktem Kunststoff zueinander kann, je nach Gestalt des herzustellenden Werkstücks, variieren. Bevorzugt ist die genannte 90°-Orientierung zueinander.

Gemäß einer weiteren zweckmäßigen Ausgestaltung sind das erste und das zweite Bauteil der Vorrichtung konzentrisch zueinander angeordnet, wobei das zu formende Werkstück zwischen einer Außenumfangsfläche des ersten Bauteils und einer Innenumfangsfläche des zweiten Bauteils angeordnet ist. Dabei ist das erste Bauteil konstruktiv und/oder durch Materialbeschaffenheit derart ausgebildet, dass dessen thermische Ausdehnung in unterschiedlichen Richtungen unterschiedlich groß sind und das zweite Bauteil in den unterschiedlichen Richtungen eine gleiche thermische Ausdehnung aufweist. Hierdurch wird das herzustellende Werkstück in der Vorrichtung zwischen dem ersten und dem zweiten Bauteil verpresst, ohne dass eine Bewegung in einer (Längs-)Richtung erfolgt.

Zweckmäßigerweise sind hierzu das erste und das zweite Bauteil zylinderförmig ausgebildet, wodurch das Werkstück gleichmäßig mit Kraft beaufschlagt wird. Die Bauteile müssen nicht zwingend zylinderförmig sein, die Querschnitte können auch oval, rechteckig usw. sein.

Insbesondere ist bei dieser konkreten Ausgestaltung weiter vorgesehen, dass das erste Bauteil unter Wärmeinwirkung eine thermische Ausdehnung in Umfangsrichtung aufweist. Demgegenüber weist das erste Bauteil unter Wärmeeinwirkung keine Ausdehnung in Axialrichtung auf. Hierdurch wird das Verpressen zwischen dem ersten und dem zweiten Bauteil sichergestellt, ohne dass eine Bewegung in Axial- oder Längsrichtung erfolgt.

Das zweite Bauteil ist bei dieser konkreten Ausgestaltung aus einem homogenen Werkstoff oder Werkstoffverbund gebildet. Hierbei ist es zweckmäßig, wenn das zweite Bauteil unter Wärmeeinwirkung eine in etwa gleiche Wärmedehnung in Umfangsrichtung und in Axialrichtung aufweist. Hierdurch kann die zum Verpressen des Formteils erforderliche Kraft zwischen dem ersten und dem zweiten Bauteil aufgebaut werden.

Die erfindungsgemäße Vorrichtung wird insbesondere zur Herstellung eines Werkstücks aus einem Verbundwerkstoff, insbesondere einem Faserverbundwerkstoff, verwendet.

Die Erfindung wird nachfolgend näher anhand eines Ausführungsbeispiels erläutert. Es zeigen:
- Fig. 1: eine schematische Querschnittsdarstellung einer erfindungsgemäßen Vorrichtung zur Formgebung eines Werkstücks, und
- Fig. 2: eine beispielhafte, prinzipielle Darstellung des Aufbaus eines ersten Bauteils der erfindungsgemäßen Vorrichtung.

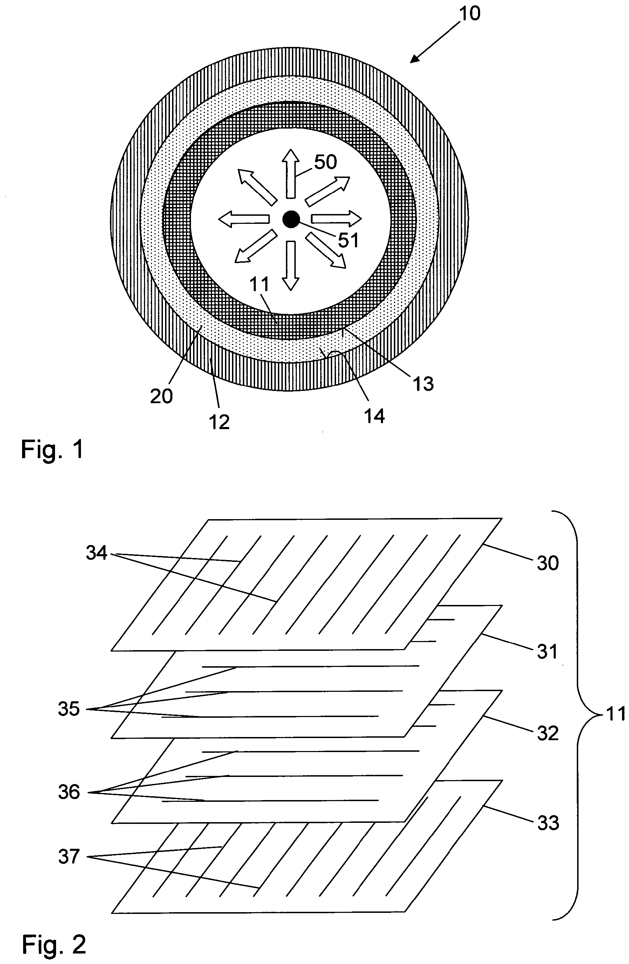

Fig. 1 zeigt in einer schematischen Querschnittsdarstellung eine erfindungsgemäße Vorrichtung 10 zur Formgebung eines Werkstücks 20. Die Vorrichtung 10 weist ein inneres, erstes Bauteil 11 und ein äußeres, zweites Bauteil 12 auf. Zwischen einer Außenumfangsfläche 13 des ersten Bauteils 11 und einer Innenumfangsfläche 14 des zweiten Bauteils 12 ist ein, insbesondere aus Faserverbundwerkstoff gebildetes Werkstück 20 angeordnet, welches durch die Vorrichtung unter Temperatureinwirkung geformt werden soll. Das erste und das zweite Bauteil 11, 12 sind beispielhaft zylinderförmig ausgebildet und konzentrisch zueinander angeordnet. Das erste und zweite Bauteil 11, 12 erstrecken sich senkrecht zur Blattebene in einer Axialrichtung 51.

Zumindest eines der beiden Bauteile 11, 12 einer erfindungsgemäßen Vorrichtung ist derart ausgebildet, dass dieses konstruktiv und/oder durch Materialbeschaffenheit in unterschiedlichen Richtungen eine unterschiedliche thermische Ausdehnung aufweist. In dem hier beschriebenen Ausführungsbeispiel ist das erste Bauteil 11 derart ausgebildet, dass dieses unter Wärmeeinwirkung eine thermische Ausdehnung in Umfangsrichtung 50, jedoch keine thermische Ausdehnung in axialer Richtung 51 (d.h. in die Blattebene hinein) aufweist.

Erreicht wird diese Eigenschaft des ersten Bauteils 11 dadurch, dass dieses aus einer Mehrzahl an Lagen 30, 31, 32, 33 aus unterschiedlichen Verbundwerkstoffen, insbesondere Faserverbundwerkstoffen, mit unterschiedlichen thermischen Ausdehnungskoeffizienten gebildet ist. Dabei sind die Lagen 30, 31, 32, 33 derart zueinander angeordnet und/oder miteinander verbunden, dass die thermische Ausdehnung in der gewünschten Umfangsrichtung 50 erfolgt und in der unerwünschten Axialrichtung 51 unterbleibt. Durch die Wahl des Materials, die Anordnung der Lagen zueinander und die Art der Verbindung der Lagen kann unter Temperatureinwirkung auch das Maß der thermischen Ausdehnung des ersten Bauteils 11 in Umfangsrichtung festgelegt werden.

In einem Ausführungsbeispiel ist der Schichtenaufbau des ersten Bauteils 11 schematisch in Fig. 2 dargestellt, welcher in einer auseinander gezogenen Darstellung vier übereinander angeordnete Lagen 30, 31, 32, 33 umfasst. Hierbei repräsentieren die Lagen 30, 33 kohlenstofffaserverstärkten Kunststoff CFK, wobei die Orientierung der darin enthaltenen Fasern 34, 37 in der gleichen Richtung erfolgt. CFK bezeichnet einen Faser-Kunststoff-Verbundwerkstoff, bei dem die Kohlenstofffasern, meist in mehreren Lagen, als Verstärkung in eine Kunststoffmatrix eingebettet werden. Zwischen den Lagen 30, 33 sind zwei Lagen 31, 32 aus glasfaserverstärktem Kunststoff GFK angeordnet, deren Fasern 35, 36 in einem 90°-Winkel zu den Fasern 34, 37 der Lagen 30, 33 angeordnet sind. GFK ist ein Faser-Kunststoff-Verbundwerkstoff aus einem Kunststoff (z.B. Polyesterharz, Epoxydharz oder Polyamid) und Glasfasern.

Durch den in Fig. 2 gezeigten Schichtenaufbau für das erste Bauteil 11 ergibt sich ein Werkstoff, welcher durch die unterschiedliche Materialauswahl und das gezielte Anordnen der Materialien im Schicht- oder Laminataufbau verschiedene Wärmedehnungen in Richtung der Fasern 34, 37 bzw. 35, 36 aufweist. Im Gegensatz dazu weist ein Werkstoff mit in allen Richtungen gleichen Wärmeausdehnungskoeffizienten, wie z.B. ein CFK-Laminat mit quasi isotropem Lagenaufbau, eine in allen Richtungen gleiche Wärmeausdehnung auf. Ein solcher Werkstoffaufbau kann beispielsweise für das zweite Bauteil 12 der Vorrichtung 10 verwendet werden.

Aufgrund der geeigneten Materialwahl und/oder der konstruktiven Gestaltung des ersten Bauteils 11 ergibt sich für dieses unter Temperatureinwirkung eine thermische Ausdehnung in Umfangsrichtung 50. Eine Temperaturausdehnung in Axialrichtung 51 erfolgt durch das erste Bauteil 11 hingegen nicht. Dadurch, dass das zweite Bauteil 12 unter Wärmeeinwirkung in Umfangs- und Axialrichtung 50, 51 eine gleiche Wärmeausdehnung aufweist, wird das Werkstück 20 zwischen dem ersten und dem zweiten Bauteil 11, 12 verpresst, wobei eine Bewegung in Axialrichtung 51 nicht erfolgt. Hierdurch kann die Qualität des Werkstücks 20 im Hinblick auf dessen Faserorientierung und Maßhaltigkeit gegenüber herkömmlichen Vorrichtungen verbessert werden.

Durch die Verwendung einer Vorrichtung mit gerichteter Wärmedehnung ist es möglich, aus Faserverbundwerkstoffen hergestellte Werkstücke während der Fertigung gezielt in eine bestimmte Richtung zu verpressen. Hierdurch können Kräfte oder relative Verschiebungen in eine andere, unerwünschte Richtung vermieden werden, welche ansonsten eine Beeinträchtigung des zu fertigenden Werkstücks, z.B. durch Faserverzug, verursachen würden. Eine erfindungsgemäße Vorrichtung weist darüber hinaus den Vorteil auf, dass eine Fertigung bzw. Entformung von bestimmten Geometrien möglich ist, welche mit herkömmlichen Vorrichtungen, deren Bauteile eine gleiche thermische Ausdehnung in allen Richtungen aufweisen, nicht möglich ist.

Die in Fig. 1 dargestellte, erfindungsgemäße Vorrichtung 10 weist lediglich beispielhaft eine zylinderförmige Gestalt auf. Die erfindungsgemäße Vorrichtung mit dem ersten und dem zweiten Bauteil 11, 12 kann eine prinzipiell beliebige Gestalt zur Formgebung eines Werkstücks aufweisen.

Ebenso ist die in Fig. 2 gezeigte Schichtenfolge einer Mehrzahl an Lagen aus unterschiedlichen Faserverbundwerkstoffen lediglich exemplarisch. Es kann auch eine andere Anzahl an Lagen zur Bereitstellung des ersten und/oder zweiten Bauteils 11, 12 verwendet werden. Ebenso kann eine unterschiedliche Anzahl an Lagen von kohlenstofffaserverstärkten Kunststoffen und glasfaserverstärkten Kunststoffen zum Einsatz kommen. Darüber hinaus kann die Anordnung der Lagen an kohlenstofffaserverstärkten Kunststoffen und glasfaserverstärkten Kunststoffen auf andere Weise realisiert sein.

Die in Fig. 2 gezeigte 90°-Orientierung der Fasern der aus kohlenstofffaserverstärkten Kunststoffen bestehenden Lagen und der aus glasfaserverstärkten Kunstoffen bestehenden Lagen ist ebenfalls lediglich exemplarisch. Die Fasern können auch in einem anderen Winkel als 90° zueinander orientiert sein. Die Orientierung der Fasern ist abhängig davon, in welchen Richtungen eine thermische Ausdehnung erfolgen soll und in welchen Richtungen diese unterbunden werden soll.

### Bezugszeichenliste

- 10: Vorrichtung
- 11: erstes Bauteil
- 12: zweites Bauteil
- 13: Außenumfangsfläche des ersten Bauteils
- 14: Innenumfangsfläche des zweien Bauteils
- 20: Werkstück
- 30: Lage eines Faserverbundwerkstoffs
- 31: Lage eines Faserverbundwerkstoffs
- 32: Lage eines Faserverbundwerkstoffs
- 33: Lage eines Faserverbundwerkstoffs
- 34: Fasern der Lage 30
- 35: Fasern der Lage 31
- 36: Fasern der Lage 32
- 37: Fasern der Lage 33
- 50: Umfangsrichtung
- 51: Axialrichtung

## Patentansprüche

1. Vorrichtung (10) zur Formgebung eines Werkstücks (20) mit zumindest einem ersten und einem zweiten Bauteil (11, 12), zwischen denen das zu formende Werkstück (20) unter Wärmeeinwirkung verpressbar ist, wobei das erste und/oder das zweite Bauteil (11, 12) konstruktiv und/oder durch Materialbeschaffenheit derart ausgebildet ist, dass dessen thermische Ausdehnung in unterschiedlichen Richtungen unterschiedlich groß ist, **dadurch gekennzeichnet, dass**
- das erste und/oder das zweite Bauteil (11, 12), das eine unterschiedliche Ausdehnung in unterschiedlichen Richtungen aufweist, zumindest eine Lage an kohlenstofffaserverstärkten Kunststoff (30, 33) und zumindest eine Lage an glasfaserverstärkten Kunststoff (31, 32) umfasst,
- die Fasern der zumindest einen Lage an kohlenstofffaserverstärkten Kunststoff (30, 33) und die Fasern der zumindest einen Lage an glasfaserverstärkten Kunststoffs (31, 32) nicht parallel zueinander orientiert sind,
die Lage an kohlenstofffaserverstärkten Kunststoff und die Lage an glasfaserverstärkten Kunststoff des ersten Bauteils derart zueinander angeordnet sind, dass die thermische Ausdehnung in Umfangsrichtung erfolgt und in der unerwünschten Axialrichtung des ersten Bauteils unterbleibt.

2. Vorrichtung nach Anspruch 1, **dadurch gekennzeichnet, dass** die Fasern der zumindest einen Lage an kohlenstofffaserverstärkten Kunststoffs (30, 33) und die Fasern der zumindest einen Lage an glasfaserverstärkten Kunststoffs (31, 32) in einem Winkel von etwa 90° zueinander orientiert sind.

3. Vorrichtung nach einem der Ansprüche 1 oder 2, **dadurch gekennzeichnet, dass** der Verbundwerkstoff zwei Lagen aus kohlenstofffaserverstärkten Kunststoff (30, 33) umfasst, zwischen denen zwei Lagen aus glasfaserverstärkten Kunststoff (31, 32) angeordnet sind, wobei sämtliche Lagen (30, 31, 32, 33) miteinander stoff- und/oder formschlüssig miteinander verbunden sind.

4. Vorrichtung nach einem der vorhergehenden Ansprüche, **dadurch gekennzeichnet, dass** das erste und das zweite Bauteil (11, 12) der Vorrichtung konzentrisch zueinander angeordnet sind, wobei das zu formende Werkstück (20) zwischen einer Außenumfangsfläche (13) des ersten Bauteils (11) und einer Innenumfangsfläche (14) des zweiten Bauteils (12) angeordnet ist und wobei das erste Bauteil (11) konstruktiv und/oder durch Materialbeschaffenheit derart ausgebildet ist, dass dessen thermische Ausdehnung in unterschiedlichen Richtungen unterschiedlich groß ist und das zweite Bauteil (11) in den unterschiedlichen Richtungen eine gleiche thermische Ausdehnung aufweist.

5. Vorrichtung nach Anspruch 4, **dadurch gekennzeichnet, dass** das erste und das zweite Bauteil (11, 12) zylinderförmig ausgebildet sind.

6. Vorrichtung nach Anspruch 4 oder 5, **dadurch gekennzeichnet, dass** das erste Bauteil (11) unter Wärmeeinwirkung eine thermische Ausdehnung in Umfangsrichtung (50) aufweist.

7. Vorrichtung nach einem der Ansprüche 4 bis 6, **dadurch gekennzeichnet, dass** das erste Bauteil (11) unter Wärmeeinwirkung keine thermische Ausdehnung in Axialrichtung (51) aufweist.

8. Vorrichtung nach einem der Ansprüche 4 bis 7, **dadurch gekennzeichnet, dass** das zweite Bauteil (12) aus einem homogenen Werkstoff oder Werkstoffverbund gebildet ist.

9. Vorrichtung nach Anspruch 8, **dadurch gekennzeichnet, dass** das zweite Bauteil (12) unter Wärmeeinwirkung eine in etwa gleiche Wärmedehnung in Umfangsrichtung (50) und in Axialrichtung (51) aufweist.

10. Verwendung der Vorrichtung nach einem der vorhergehenden Ansprüche zur Herstellung eines Werkstücks aus einem Verbundwerkstoff.

## Claims

1. A device (10) for shaping a workpiece (20) comprising at least a first and a second component (11, 12) between which the workpiece (20) to be shaped can be molded under the effect of heat, a design and material properties of the first and/or the second component (11, 12) is selected such that the component's thermal expansion is different in different directions; wherein
- the first and/ or second component (11,12), which has a different thermal expansion in different directions, comprises at least one layer of carbon fiber reinforced plastic (30, 33) an at least one layer of glass fiber reinforced plastic (31,32);
- fibers of the at least one layer of carbon fiber reinforced plastic (30,33) and fibers of the at least one layer of glass fiber reinforced plastic (31,32) are not oriented parallel to each other, **characterized in that**
the layer of carbon fiber reinforced plastic and the layer glass fiber reinforced plastic of the first component are arranged in such a way, that the thermal expansion takes place in circumferential direction and does not take place in the undesired axial direction of the first component.

2. The device according to claim 1, **characterized in that** the fibers of the at least one layer of carbon fiber reinforced plastic (30, 33) and the fibers of the at least one layer of glass fiber reinforced plastic (31, 32) are oriented to each other at an angle of approximately 90°.

3. The device according to any one of the claims 1 to 2, **characterized in that** the composite comprises two layers of carbon fiber reinforced plastic (30, 33) between which two layers of glass fiber reinforced plastic (31, 32) are arranged, wherein all layers (30, 31, 32, 33) are connected to each other in a firmly bonding and/or form-locking manner.

4. The device according to any one of the preceding claims, **characterized in that** the first and the second component (11, 12) of the device are arranged concentrically to each other, wherein the workpiece (20) to be shaped is arranged between an outer circumferential surface (13) of the first component (11) and an inner circumferential surface (14) of the second component (12) and wherein the design and the material properties of the first component (11) are selected such that the thermal expansion of said component is different in different directions and the second component (11) has an identical thermal expansion in the different directions.

5. The device according to claim 4, **characterized in that** the first and the second component (11, 12) are formed cylindrically.

6. The device according to claim 4 or claim 5, **characterized in that** under the effect of heat, the first component (11) has a thermal expansion in the circumferential direction (50).

7. The device according to any one of the claims 4 to 6, **characterized in that** under the effect of heat, the first component (11) has no thermal expansion in the axial direction (51).

8. The device according to any one of the claims 4 to 7, **characterized in that** the second component (12) is formed from a homogenous material or material composite.

9. The device according to claim 8, **characterized in that** under the effect of heat, the second component (12) has an approximately identical thermal expansion in the circumferential direction (50) and the axial direction (51).

10. A use of the device according to any one of the preceding claims for manufacturing a workpiece from a composite.

## Revendications

1. Un dispositif (10) pour former une pièce (20) comprenant au moins un premier et un second composants (11,12) entre lesquels la pièce à former (20) peut être moulée sous l'effet de la chaleur, un design et des propriétés de matériau du premier et/ou du second composant (11,12) est choisi de telle sorte que l'expansion du composant soit différente dans des directions différentes;
- le premier et/ou le second composant (11,12), qui a une dilatation thermique différente dans des directions différentes, comprend au moins une couche de plastique renforcé de fibres de carbone (30, 33) et au moins une couche de plastique renforcée de fibres de verre (31,32)
les fibres de l'au moins une couche de plastique renforcée de fibres de carbone (30,33) et les fibres de l'au moins une couche de plastique renforcée de fibres de verre (31,32) ne sont pas orientées parallèlement entre elles, **caractérisé en ce que**
la couche de plastique renforcé de fibres de carbone et la matière plastique renforcée de fibres de verre du premier composant sont disposées de telle sorte que la dilatation thermique se fasse dans la direction circonférentielle et ne se produise pas dans la direction axiale non souhaitée du premier composant.

2. Le dispositif selon la revendication 1, **caractérisé en ce que** les fibres de l'au moins une couche de plastique renforcée de fibres de carbone (30, 33) et les fibres de l'au moins une couche de matière plastique renforcée de fibres de verre (31, 32) sont orientées pour l'un à l'autre d'un angle d'environ 90°.

3. Le dispositif selon l'une quelconque des revendications 1 à 2, **caractérisé en ce que** le composite comprend deux couches de plastique renforcée de fibres de carbone (30,33) entre lesquelles sont disposées deux couches de plastique renforcée de fibres de verre (31,32), dans lequel toutes les couches (30, 31, 32, 33) sont reliées l'une à l'autre de manière collante et/ou en complémentarité de forme.

4. Le dispositif selon l'une quelconque des revendications précédentes, **caractérisé en ce que** les premier et second composants (11,12) du dispositif sont disposés concentriquement l'un par rapport à l'autre, la pièce à former (20) étant disposée entre une surface circonférentielle externe (13) du premier composant (11) et une surface circonférentielle interne (14) du second composant (12) et dans lequel le design et les propriétés de matériau du premier composant (11) sont choisies de telle sorte que la dilatation thermique dudit composant est différent dans des directions différentes et le second composant (11) a une dilatation thermique identique dans les différentes directions.

5. Le dispositif selon la revendication 4, **caractérisé en ce que** le premier et le second composant (11,12) sont formés de manière cylindrique.

6. Le dispositif selon la revendication 4 ou la revendication 5, **caractérisé en ce que**, sous l'effet de la chaleur, le premier composant (11) présente une dilatation thermique dans la direction circonférentielle (50).

7. Le dispositif selon l'une quelconque des revendications 4 à 6, **caractérisé en ce que**, sous l'effet de la chaleur, le premier composant (11) n'a pas de dilatation thermique dans la direction axiale (51).

8. Le dispositif selon l'une quelconque des revendications 4 à 7, **caractérisé en ce que** le second composant (12) est formé d'un matériau ou d'un matériau composite homogène.

9. Le dispositif selon la revendication 8, **caractérisé en ce que**, sous l'effet de la chaleur, le deuxième composant (12) présente une dilatation thermique sensiblement identique dans la direction circonférentielle (50) et dans la direction axiale (51).

10. Une utilisation du dispositif selon l'une quelconque des revendications précédentes pour fabriquer une pièce à partir d'un composite.
